# EUROPÄISCHE PATENTANMELDUNG

(11) **EP 1 202 418 A2**
(43) Veröffentlichungstag der Anmeldung: **02.05.2002**
(21) Anmeldenummer: 01121677.7
(22) Anmeldetag: 14.09.2001
(51) Int. Cl.: H02G 3/04

(54) **Vielseitig handhabbare Funktionsleiste für Raumwandungen, insbesondere Raumecken**

(30) Priorität: 25.10.2000 DE 10052802
(71) Anmelder: hülsta-werke Hüls GmbH & Co KG, D-48703 Stadtlohn (DE)
(72) Erfinder: Tünte, Udo, 46348 Raesfeld (DE)
(74) Vertreter: Habbel, Ludwig (Lutz), Dipl.-Ing.

(57) **Zusammenfassung**

Bei einer Leiste zur Anbringung an einer Raumwandung, wie Boden- oder Deckenleiste, wobei die Leiste mehrteilig aufgebaut ist und einen an einer Raumwandung, wie Wand, Decke oder Boden festlegbaren Halter aufweist, sowie eine lösbar am Halter festlegbare Blendleiste, wobei der Halter zwischen der Raumwandung und der Blendleiste einen Freiraum zur Durchführung von elektrischen Kabeln schafft, schlägt die Erfindung vor, daß die Blendleiste eine Austrittsöffnung schafft, welche sich über im wesentlichen die gesamte Länge der Blendleiste erstreckt, und welche das Durchführen von elektrischen Kabeln in den oder aus dem Freiraum ermöglichend bemessen ist.

## Beschreibung

Die Erfindung betrifft eine Leiste nach dem Oberbegriff des Anspruches 1.

Aus der Praxis ist eine Vielzahl von Leisten bekannt, die in Raumecken anbringbar sind:

Aus dem Bereich der Decken sind gattungsfremde Dekorleisten bekannt, beispielsweise als extrudierte Profile aus Schaumwerkstoff, die als Dekorelemente vorgesehen sind und in Anlehnung an Stuckarbeiten eine preisgünstige Verschönerung von Wohnräumen ermöglichen sollen.

Weiterhin sind Bodenleisten bekannt, die gattungsgemäß als Funktionsleisten ausgestaltet sind und dem möglichst unauffälligen Verlegen von Kabeln oder Rohrleitungen dienen, so daß keine nachträglichen Installationsarbeiten wie das Einbringen von Schlitzen in Raumwandungen erforderlich sind und dennoch die Kabel "unsichtbar" verlegt werden können. Derartige Funktionsleisten, obwohl sie jeweils mehrere einzelne Elemente umfassen werden nachfolgend kurz und zusammenfassend jeweils als "Leiste" bezeichnet.

Der Erfindung liegt die Aufgabe zugrunde, eine gattungsgemäße Leiste dahingehend zu verbessern, daß diese mit möglichst einfachen Mitteln an unterschiedliche und sich verändernde Wünsche hinsichtlich der Raumnutzung anpaßbar ist.

Diese Aufgabe wird durch eine Leiste mit den Merkmalen des Anspruches 1, 4, 8, 11 oder 13 gelöst.

Die Erfindung schlägt mit anderen Worten einerseits vor, einen Freiraum zwischen der Leiste und einer Raumwandung verbleiben zu lassen oder einen Schlitz in der Blendleiste vorzusehen, so dass sich eine Austrittsöffnung zum Verlegen von Kabeln an nahezu jeder Stelle entlang der Leiste ergibt.

Die Leisten können dabei nicht nur wie Boden- oder Deckenleisten in Raumecken angebracht werden, sondern auch in erheblichem Abstand vom Boden bzw. von der Decke, z. B. etwa in Kopfhöhe entlang einer Wand. So ergibt sich die Möglichkeit, eine Leiste auf der Höhe an einer Wand anzubringen, wo eine elektrische Zuleitung aus der Wand mündet, z. B. für eine Wandlampe. Durch die Leiste ergibt sich die Möglichkeit, den elektrischen Anschluß unauffällig dorthin zu verlegen, wo er momentan erwünscht ist, also beispielsweise die Wandlampe an eine andere Stelle zu verlagern, und ihn ebenso problemlos später zurück oder an eine noch ander Stelle zu verlagern. Ebenso kann mittels dieser Leiste problemlos eine großflächige indirekte Beleuchtung installiert werden.

Der Begriff "Kabel" ist verallgemeinernd gebraucht und umfasst allgemein hinter der Blendleiste verlegbare Gegenstände, beispielsweise auch Rohrleitungen. Sowohl ästhetisch als auch hinsichtlich möglicher Unfallgefahren ist vorteilhaft, dass eine möglichst kurze freie Kabelstrecke bewirkt werden kann.

Der Begriff der "Austrittsöffnung" ist ebenfalls verallgemeinernd gebraucht und umfasst nicht nur eine einzige, durchgehende Austrittsöffnung, sondern auch zwei oder mehrere separate Bohrungen, Schlitze o. dgl., die es im Sinne der vorliegenden Erfindung ermöglichen, an nahezu beliebiger Stelle entlang der Leiste Kabel aus dem Freiraum zwischen der Leiste und einer Raumwandung herauszuführen und / oder in diesen Freiraum hereinzuführen.

Beispielsweise können Bodenleisten, die üblicherweise bis auf den Fußboden reichen, erfindungsgemäß oberhalb des Fußbodens enden, so daß für die hinter den Blendleisten geführten elektrischen Kabel an jeder-Stelle die Möglichkeit besteht, hinter der Leiste und unter der Leiste herausgeführt zu werden. Die Aufstellung von Lampen kann daher an beliebiger Stelle erfolgen, wobei jeweils vorteilhaft nur eine minimal kurze Strecke eines offen verlaufenden Kabels zur Leiste erfolgt. Wird der Standort der Lampe verändert, kann auf einfache Weise das Kabel dementsprechend an anderer Stelle in den Freiraum zwischen Blendleiste und Wand geführt werden.

Zudem kann auf diese Weise die Blendleiste vorteilhaft vor steckdosenähnlichen Anschlüssen an das Stromnetz verlaufen, so daß unsichtbar ein Anschluß an das Stromnetz geschaffen werden kann und die Stromverbraucher an von der Steckdose ggf. weit beabstandeter Stelle mit einer nur sehr kurzen sichtbaren Kabelstrecke aufgestellt werden können.

Gemäß einem weiteren Vorschlag ermöglicht die Bodenleiste auf besonders einfache Weise die nachträgliche Verlegung weiterer Kabel oder die Entnahme von bereits verlegten Kabeln, oder die Umverlegung von genutzten Kabeln an eine andere Stelle, beispielsweise wenn elektrische Verbraucher an einem anderen Ort aufgestellt werden sollen, indem die Blendleiste gegenüber dem Halter schräg abgekippt werden kann. Hierzu ist eine untere Verbindung zwischen Blendleiste und Halter vorgesehen, die beim Öffnen der Blendleiste beibehalten wird, sowie eine obere Verbindung, die zum Öffnen der Blendleiste gelöst wird.

Dabei vergrößert sich im oberen Bereich der Blendleiste der Abstand zum Halter, so daß der Freiraum zwischen Blendleiste und Raumwandung nun problemlos zugänglich ist. Die Kabel können auf einfache Weise diesem Freiraum entnommen oder in den Freiraum eingeführt werden. Andere, möglicherweise ebenfalls im Freiraum verlegte Kabel sind während dieser Arbeiten sicher gehalten, da durch das schräge Aufkippen der Blendleiste diese weiter unten nach wie vor mit dem Halter verbunden ist, so daß die bereits verlegten Kabel zuverlässig gehalten werden und ihr Herabfallen vermieden wird.

Insbesondere wird durch diese Befestigung, unabhängig von der Kipp- oder Schwenkmöglichkeit der Blendleiste, eine besonders einfache Handhabung der Blendleiste ermöglicht, da nicht gleichzeitig die unteren und oberen Verbindungen kontrolliert werden müssen, wobei für den Benutzer die Sicht auf die untere Verbindung durch die obere Verbindung behindert wäre. Vielmehr kann erst gut einsehbar die untere Verbindung hergestellt werden, und erst anschließend die obere Verbindung, so dass auch bereits bei der Erstmontage eine einfache Handhabung der Leiste möglich ist.

Gemäß einem weiteren Vorschlag, der sich auf als Deckenleisten verwendete Leisten bezieht, schlägt die Erfindung vor, die Blendleiste vom Halter in einer Richtung abziehbar auszugestalten, die nicht senkrecht nach unten verläuft. Gegenüber fest in Raumecken eingeklebten Leisten, wie dies beispielsweise von den aus Schaumwerkstoff hergestellten Leisten bekannt ist, ergibt sich durch die Abziehbarkeit die problemlose Möglichkeit, Kabel im Freiraum zwischen Blendleiste und Raumwandung neu zu verlegen oder zu entnehmen oder Anschlüsse dieser Kabel an andere Stellen zu verlegen. So kann beispielsweise die Positionierung von Deckenlampen oder Wandlampen, die deckennah angeordnet sind, geändert werden und die jeweilige Zuleitung an anderer Stelle hinter die Blendleiste geführt werden.

Auf diese Weise wird einerseits eine gewünschte, besonders "aufgeräumte" Gestaltung der Raumecke mit einfachen und preisgünstigen Mitteln ermöglicht: die Kabel sind unsichtbar verlegbar und es bedarf hierzu nicht einer vollflächigen Verkleidung der Decke, wie dies von abgehängten Decken oder von Paneelverkleidungen her bekannt ist.

Durch die von einer senkrecht nach unten abweichenden Abziehrichtung ist sichergestellt, dass hohe Haltekräfte aufgenommen werden können und die Blendleiste sich nicht allein durch ihr Eigengewicht lösen kann, selbst wenn die Werkstoffe der Blendleiste oder des Halters temperatur- und / oder feuchtigkeitsbedingt arbeiten sollten und ggf. zu einer Verringerung der Klemmkraft führen sollten.

Um die Blendleiste vom Halter abziehbar auszugestalten, können Stege am Halter vorgesehen sein, auf welche die Blendleiste mit entsprechenden Nuten aufsteckbar ist. Ebenso sind in umgekehrter Ausgestaltung Clips möglich, die an der Blendleiste vorgesehen sind und die in eine Nut des Halters eingeführt werden.

Gemäß einem weiteren Vorschlag der Erfindung ist bei Deckenleisten vorgesehen, Haltemittel zum Anhängen von Lasten zu schaffen, so daß beispielsweise Lampen, Bilder oder Gardinen unmittelbar an der Deckenleiste befestigt werden können und keine zusätzlichen Haltemittel für derartige Lasten benötigt werden. Auf diese Weise wird die gewünschte, besonders "aufgeräumte" Gestaltung der Raumecke ermöglicht, da keine zusätzliche Haltemittel für die Lasten sichtbar sind, denn diese Haltemittel können unsichtbar in der Deckenleiste vorgesehen sein.

Zudem ergibt sich auf diese Weise einfach die Möglichkeit, die Haltemittel über die ganze Länge der Deckenleiste verlaufend auszugestalten, also nicht als punktuelle Haltemittel, sondern als Führungsschienen. Diese Führungsschienen können die Lampen, Bilder oder anderen angehängten Lasten längsbeweglich aufnehmen, ermöglichen also erstens eine stufenlose Veränderung der räumlichen Anordnung der Last, und zweitens eine rückstandfreie derartige Veränderung, so daß beispielsweise Lampen oder Bilder umgehängt werden können, ohne an der alten Stelle sichtbare Rückstände, wie Nägel, Dübel, Löcher od. dgl. an einer Wand, einer Decke oder einer Deckenleiste zu hinterlassen.

Diese Haltemittel können beispielsweise in der Geometrie der Blendleiste oder des Halters vorgesehen sein, z. B. wenn diese als Strangpreßprofil hergestellt werden, oder die Haltemittel können als nachträglich montierbare Einsätze ausgestaltet sein.

Die Halter der Blendleisten können in an sich bekannter Weise an mehreren separaten Stellen die Blendleisten festlegen, es kann jedoch auch vorgesehen sein, die Halter als Profilleisten auszugestalten, die sich im wesentlichen über die gesamte Länge der Blendleisten erstrecken. So ist eine einfache Montage möglich, ohne dass eine Anzahl separater Halter in gleicher Höhe zueinander ausgerichtet werden muß. Regelmäßige Ausnehmungen können bei derartigen profilleistenartigen Haltern vorgesehen sein, um Kabeldurchlässe zu bilden.

Weitere vorteilhafte Ausgestaltungen der Erfindung sind den Ansprüchen zu entnehmen.

Ausführungsbeispiele der Erfindung werden nachfolgend anhand der Zeichnungen näher erläutert. Dabei zeigen die
- Fig. 1 bis 3: ein erstes Ausführungsbeispiel einer Bodenleiste und deren Teile,
- Fig. 4 bis 6: ein erstes Ausführungsbeispiel einer Deckenleiste und deren Teile,
- Fig. 7 bis 9: ein zweites Ausführungsbeispiel einer Deckenleiste,
- Fig. 10 bis 12: ein drittes Ausführungsbeispiel einer Deckenleiste,
- Fig. 13: ein zweites Ausführungsbeispiel einer Bodenleiste und deren Teile, und
- Fig. 14 bis 17: weitere Ausgestaltungen von Deckenleisten.

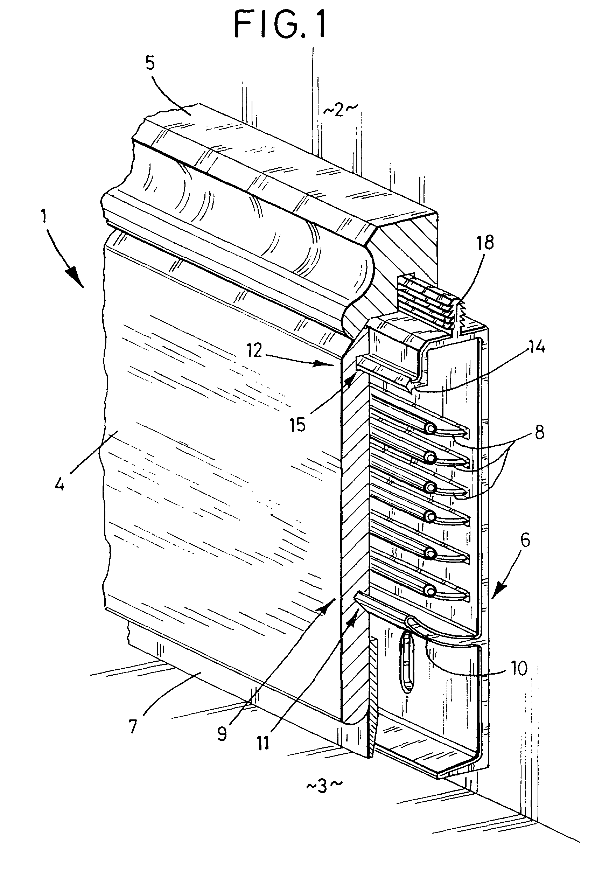

In Fig. 1 ist mit 1 allgemein eine Leiste bezeichnet, die zur Verkleidung einer Raumecke bzw. zur Anbringung in einer Raumecke vorgesehen ist. Dabei ist die Leiste 1 als Bodenleiste ausgestaltet und vor einer ersten Raumwandung 2 in Form einer Wand angeordnet sowie oberhalb einer zweiten Raumwandung 3 in Form eines Fußbodens.

Die Leiste 1 ist mehrteilig ausgestaltet: Sie umfaßt eine Blendleiste 4, welche im wesentlichen die Höhe der Leiste 1 bestimmt sowie eine obere Abdeckleiste 5, wobei Abdeck- und Blendleiste auf einem Halter 6 festgelegt sind, der auch als Halteclip bezeichnet werden kann. An das untere Ende der Blendleiste 4 schließt ein Kantenstreifen 7 an, der wie eine Dichtlippe aus einem elastisch biegsamen Material, wie beispielsweise Gummi, Silikon od. dgl., ausgebildet ist. Der Kantenstreifen 7 schützt zudem Kabel vor Beschädigungen, die evtl. durch Scheuerbewegungen der Kabel an der hinteren Unterkante der Blendleiste entstehen könnten, so dass eine spezielle Kantenbearbeitung nicht erforderlich ist.

Abweichend von dem dargestellten Ausführungsbeispiel kann sich der Kantenstreifen 7 bis zum Boden erstrecken, um tatsächlich eine Dichtlippe zu bilden, die das Eindringen von Verschmutzungen in den Freiraum hinter der Blendleiste 4 verhindert und die aufgrund ihrer Verformbarkeit auch den Ausgleich von Bodenunebenheiten ermöglicht.

Anstelle des Abstandes zum Boden kann die Leiste 1 auch beispielsweise einen über ihre gesamte Länge durchlaufenden oder mehrere einzelne Längsschlitze aufweisen. In allen Fällen wird eine Austrittsöffnung geschaffen, die es erlaubt, dass Kabel an nahezu beliebiger Stelle hinter die Blendleiste 4 geführt werden können bzw. aus dem Freiraum vor die Blendleiste 4 geführt werden können.

Anstelle des einteiligen Kantenstreifens 7 kann beispielsweise eine Kantenleiste aus mehreren Abschnitten vorgesehen sein, wobei die einzelnen Abschnitte dieser Kantenleiste an Sollbruchstellen abbrechbar sind, oder wobei die einzelnen Abschnitte scharnierartig schwenkbar aufgehängt sind, oder sie kann beispielsweise in Form einer Bürste ausgestaltet sein, wobei die einzelnen Borsten dieser Bürste elastisch verformbar sind. In allen Fällen wird eine Abdeckung der Austrittsöffnung geschaffen, die einen Einblick in den Freiraum hinter der Blendleiste verhindert.

Der Halter 6 schafft zwischen der Blendleiste 4 und der ersten Raumwandung 2 einen in mehrere Einzelkanäle unterteilten Freiraum zur Führung von elektrischen Kabeln, wie Netzstromleitungen, Lautsprecher- oder Antennenkabel od. dgl., oder für Rohrleitungen mit vergleichsweise geringem Durchmesser. Zur präzisen Führung der einzelnen Kabel weist der Halter 6 eine Vielzahl von Führungsstegen 8 auf, so daß die Kabel gut sortiert hinter der Blendleiste 4 angeordnet werden können und die Übersichtlichkeit der Verkabelung hierdurch vereinfacht wird.

Während die Blendleiste 4, die Abdeckleiste 5 und der Kantenstreifen 7 als langgestreckte Elemente ausgebildet sind, handelt es sich bei dem Halter 6 vorzugsweise um eines von mehreren gleichartigen, vergleichsweise kurzen Elementen von wenigen Zentimetern Länge, so daß sich beispielsweise die Möglichkeit ergibt, zwischen zwei derartigen Haltern 6 die Kabel nach unten zur Austrittsöffnung zu führen oder Steckdosen bzw. wie Steckdosen gestaltete elektrische Versorgungsanschlüsse vorzusehen, so daß diese Versorgungsanschlüsse unsichtbar und für Kinder unerreichbar hinter der Blendleiste 4 angeordnet sein können.

Diese Versorgungsleitungen oder auch Leitungen, die zu im Raum befindlichen Verbrauchern führen, wie beispielsweise Stehlampen, können unter der Blendleiste 4 durch Verformung des Kantenstreifens 7 aus dem Freiraum zwischen Blendleiste 4 und der Raumwandung 2 herausgeführt und in den Raum geführt werden.

Die Abdeckleiste 5 ist bei dem dargestellten Ausführungsbeispiel stark profiliert. Demgegenüber glattere, weniger stark konturierte Abdeckleisten können ersatzweise vorgesehen sein. Durch ihre Auswechselbarkeit wird die Anpassung des gesamten optischen Erscheinungsbildes der Leiste 1 an unterschiedlich gewünschte Stilrichtungen ermöglicht, beispielsweise durch die erwähnte Konturierung, aber auch durch Farbgebung und Materialwahl der Abdeckleisten. Bei wechselnden Einrichtungsstilen des Raumes kann daher die Leiste 1 grundsätzlich eingebaut verbleiben und dennoch durch Auswechseln der Abdeckleisten 5 preisgünstig an die unterschiedlichen Einrichtungsstile angepaßt werden.

Über diese optische Beeinflussung der Leiste 1 hinaus stellt die Abdeckleiste 5 einen Verschluß oder eine Sicherung dar, um die Blendleiste 4 in ihrer dargestellten üblichen Gebrauchsstellung zu halten: Erst nach Abnahme der Abdeckleiste 5 kann die Blendleiste 4 vom Halter 6 entfernt werden. Sie weist dann noch zwei Verbindungen zum Halter 6 auf: Eine erste, untere Verbindung 9 wird zwischen einer ersten, unteren Halterippe 10 des Halters 6 und einer korrespondierenden ersten, unteren Nut 11 der Blendleiste 4 geschaffen. Die Halterippe 10 verläuft gebogen aufwärts und endet schräg nach oben weisend. Die erste Nut 11 verläuft ebenfalls schräg nach oben weisend in das Material der Blendleiste 4. Durch ihre vergleichsweise große Länge ist die Halterippe 10 elastisch verformbar.

Eine zweite Verbindung 12 zwischen Blendleiste 4 und Halter 6 wird durch eine zweite, obere Halterippe 14 des Halters und durch eine zweite, obere Nut 15 der Blendleiste 4 geschaffen. Die obere Halterippe 14 weist eine pfeilspitzenartige Gestaltung auf, die für eine besonders sichere Festlegung der Blendleiste 4 sorgt. Halterippe 14 und Nut 15 verlaufen etwa horizontal, so daß nach Entfernen der Abdeckleiste 5 die Blendleiste 4 im oberen Bereich horizontal vom Halter 6 abgezogen werden kann, wobei die Nut 15 der Blendleiste 4 von der oberen Halterippe 14 abgezogen wird.

Dabei verbleibt die Blendleiste 4 auf der unteren Halterippe 10, die sich bei einer anschließenden Kipp- bzw. Schwenkbewegung der Blendleiste 4 elastisch verformt. Die Leiste 1 kann also regelrecht aufgeklappt werden, so daß einerseits eine gute Zugänglichkeit von oben an die einzelnen Kabel möglich ist und einzelne Kabel hinzugefügt oder entfernt werden können, daß aber andererseits sichergestellt ist, daß die Kabel in ihrer unsichtbar verlegten, von dem Fußboden 3 beabstandeten Lage verbleiben, selbst wenn sie von ihren Führungsstegen 8 rutschen sollten.

Wenn eine noch bessere Zugänglichkeit zu den Kabeln gewünscht ist, kann die Blendleiste 4 vollständig vom Halter 6 abgenommen werden und hierzu von der unteren Halterippe 10 abgezogen werden. Da die Halterippe 10 gegenüber den Führungsstegen 8 weiter vorsteht, bietet sie auch bei abgenommener Blendleiste 4 immer noch einen zusätzllichen Schutz dagegen, daß Kabel versehentlich nach unten auf den Fußboden 3 fallen.

Wenn nach der Kabelverlegung die Blendleiste 4 wieder in der dargestellten Anordnung auf dem Halter 6 angeordnet ist, erfolgt eine zusätzliche Sicherung dieser Anordnung dadurch, daß die Abdeckleiste 5 die Blendleiste 4 im Bereich von deren Oberseite übergreift, so daß ein versehentliches Abziehen der Blendleiste 4 von der oberen Halterippe 14 ausgeschlossen ist.

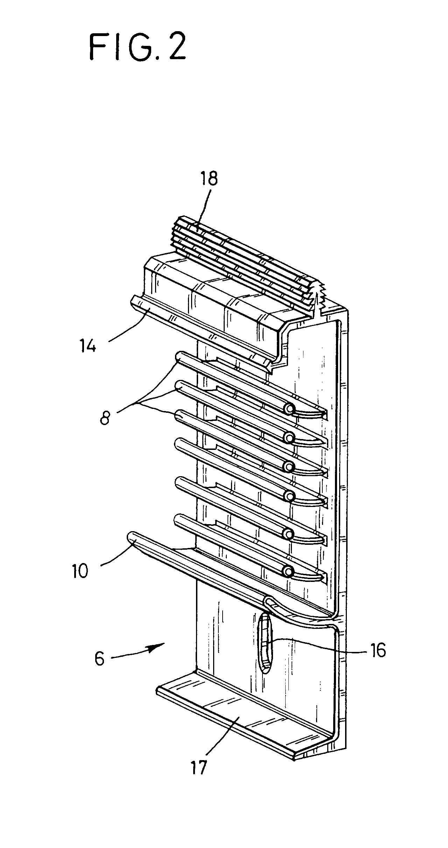

Fig. 2 verdeutlicht den Aufbau des Halters 6. Dieser weist ein unteres, vertikal ausgerichtetes Langloch 16 auf und ein oberes, horizontal angeordnetes Langloch, welches durch die obere Halterippe 14 und deren Fortsätze bei der aus Fig. 2 ersichtlichen Darstellung verdeckt ist.

Ein unteres, abgewinkeltes Fußteil 17 des Halters 6 dient einerseits als Auflage für ggf. unterhalb der Halterippe 10 zu verlegende Leitungen, Rohre od. dgl., welche nicht zwischen die Führungsstege 8 passen, und es kann auch als Anschlag zur Höhenausrichtung des Halters 6 dienen, beispielsweise indem dieses Fußteil 17 unmittelbar auf den Fußboden 3 oder auf entsprechende Distanzklötzchen aufgestellt wird.

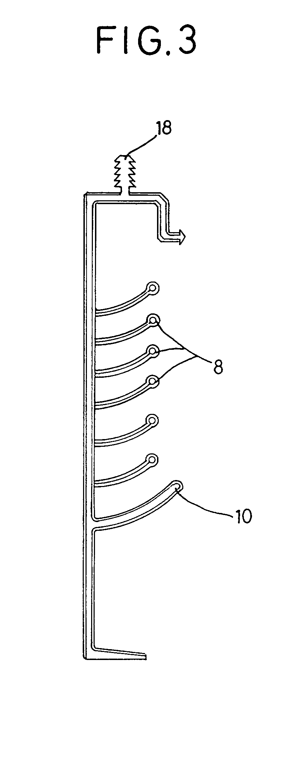

Aus Fig. 3 ist ersichtlich, wie sich die untere Halterippe 10 weiter von der Grundplatte des Halters 6 erstreckt als die Führungsstege 8.

Die in Fig. 1 dargestellten Verbindungen 9 und 12 zwischen Blendleiste 4 und Halter 6 sind direkte Verbindungen, bei denen der Halter 6 unmittelbar an der Blendleiste 4 anliegt. Eine dritte, indirekte Verbindung wird geschaffen durch Zwischenschaltung der Abdeckleiste 5, die einerseits am Halter 6 auf einem oberen Haltesteg 18 festgelegt ist und die andererseits die Oberkante der Blendleiste 4 übergreift und damit diese Blendleiste 4 festlegt. Gegebenenfalls kann auf die dargestellte obere zweite Verbindung 12 verzichtet werden, und diese zweite Verbindung kann durch die Abdeckleiste 5 ersetzt werden, wobei auch bei dieser Ausgestaltung der Leiste 1 die Blendleiste 4 gegenüber dem Halter 6 in der erwähnten Weise nach vorne aufklappbar ist.

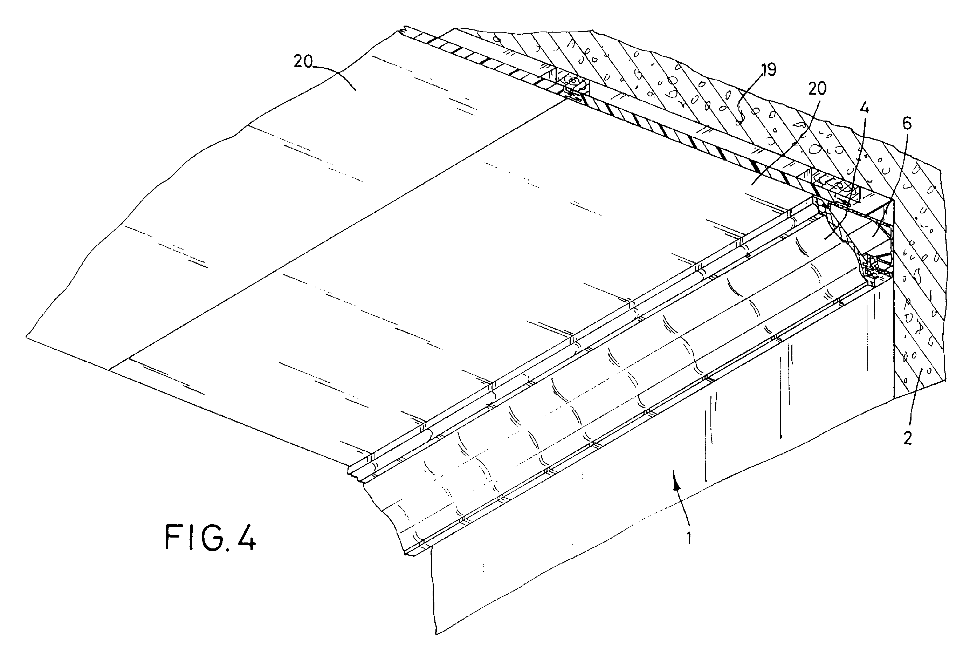

Fig. 4 zeigt eine Leiste 1 im Bereich einer Raumecke, wobei hier die Ecke durch die erwähnte erste Raumwandung 2 in Form einer Wand und andererseits durch eine dritte Raumwandung 19 in Form einer Decke gebildet wird. Diese dritte Raumwandung 19 jedoch ist verkleidet, so daß für den Betrachter die sichtbare dritte Raumwandung durch Paneelelemente 20 gebildet wird, welche als Deckenverkleidung dienen und an welche die Blendleiste 4 der Leiste 1 anschließt, während gegenüber der anderen Raumwandung 2 die Blendleiste 4 einen Abstand einhält.

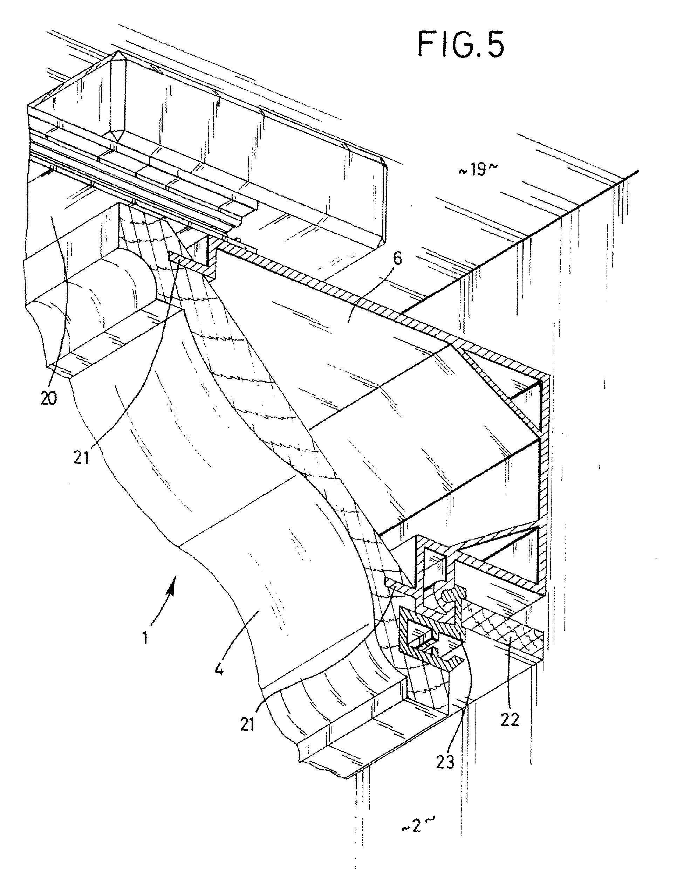

Aus Fig. 5 ist die Leiste 1 näher ersichtlich: Auch sie besteht aus einer Blendleiste 4 und einem Halter 6. Der Halter 6 weist horizontal verlaufende Stege 21 auf, auf welche die Blendleiste 4 aufgesteckt ist. Die Blendleiste 4 ist daher auf einfache Weise und werkzeuglos abnehmbar, wobei anstelle der Verbindung mittels der Stege 21 auch eine Halterung mittels Magneten, Klettverschlüssen od. dgl. vorgesehen sein könnte. Die Stege 21 gewährleisten jedoch vorteilhaft eine Belastbarkeit der Blendleiste 4 in vertikaler Richtung, wobei derartige Belastungen beispielsweise von Kabeln resultieren können, die in dem Freiraum zwischen der Blendleiste 4 und dem Halter 6 geführt werden.

Auch diese Halter 6 erstrecken sich vorteilhaft nicht über die gesamte Länge wie die Blendleiste 4, so daß zwischen den Haltern 6 die Möglichkeit besteht, die Kabel aus ihrem Freiraum nach unten zu führen, wenn beispielsweise Deckenstrahler elektrisch angeschlossen werden sollen.

Bei dem dargestellten Ausführungsbeispiel ist eine derartige Kabelverlegung nicht vorgesehen. Daher ist hier eine Schattenleiste 22 aus festem Werkstoff, beispielsweise aus einem Holzwerkstoff, vorgesehen, die sich vom Halter 6 bis an die Wand 2 erstreckt. Anstelle einer derartigen, beispielsweise dunkel eingefärbten Schattenleiste 22 kann jedoch ein elastisch verformbarer Kantenstreifen, eine Dichtlippe, Bürste od. dgl. ähnlich dem bereits beschriebenen Kantenstreifen 7 vorgesehen sein.

Über die Halterung der Blendleiste 4 hinaus ermöglicht der Halter 6 die Befestigung von Lasten an der Leiste 1: Zu diesem Zweck trägt der Halter 6 eine Führungschiene 23, die sich wie die Blendleiste 4 über die gesamte Länge der Wand 2 erstrecken kann und die beispielsweise das Einhängen von Gardinen, Bildern oder Lampen ermöglicht.

Die durch die Schraffierung angedeuteten Werkstoffe, wie beispielsweise ein Holzwerkstoff für die Blendleiste 4 und für die Schattenleiste 22, oder die Verwendung von Kunststoff für den Halter 6, oder die Verwendung von Metall wie beispielsweise Aluminium für die Führungsschiene 23 sind rein beispielhaft gewählt. Je nach erforderlicher Festigkeit dieser Bauteile einerseits und nach andererseits gewünschter Gewichtsreduzierung können unterschiedliche und an den jeweiligen Verwendungszweck angepaßte Werkstoffe Verwendung finden; dies gilt nicht nur für das Ausführungsbeispiel der Fig. 4 bis 6, sondern allgemein für die hier beschriebenen Leisten, seien es Boden- oder Deckenleisten.

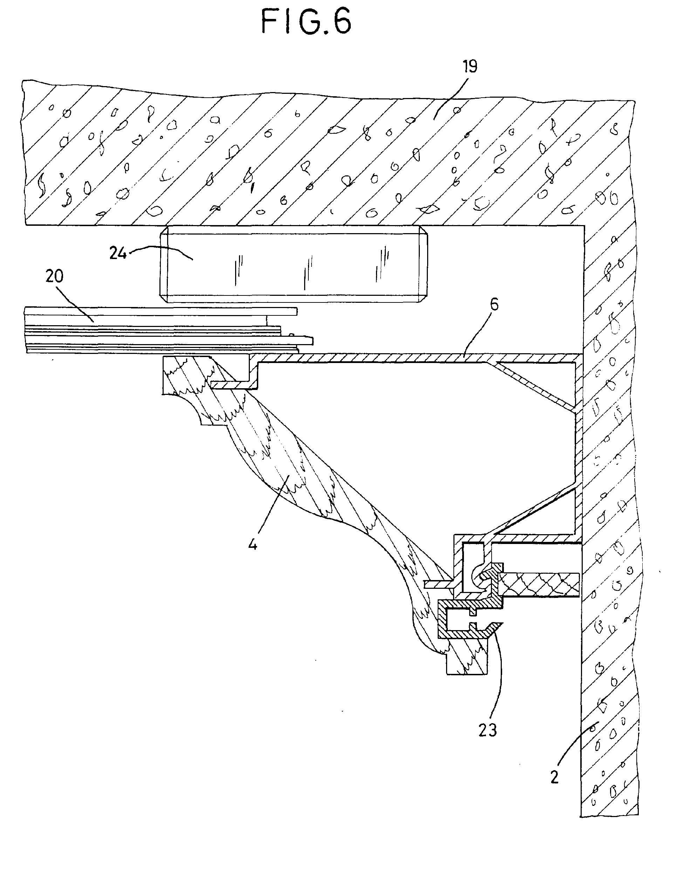

Aus Fig. 6 ist die Deckenkonstruktion nach Fig. 4 und 5 näher ersichtlich: Die ringsum genuteten Paneelelemente 20 sind an einer Unterlattung 24 festgelegt, die ihrerseits an der dritten Raumwandung 19, nämlich der Decke, beispielsweise mit Hilfe von Dübeln, befestigt ist. Der Halter 6 ist an der zweiten Raumwandung 2, nämlich der Wand, befestigt. Er kann vorteilhaft mit seinem am weitesten von der Wand 2 beabstandeten Ende an den Paneelelementen 20 oder an der Unterlattung 24 oder, beispielsweise durch entsprechend lange Schrauben, an der dritten Raumwandung 19 befestigt sein, um auf diese Weise zuverlässig formstabil die Deckleiste 4 zu halten sowie die ggf. an die Führungsschiene 23 angehängten Lasten.

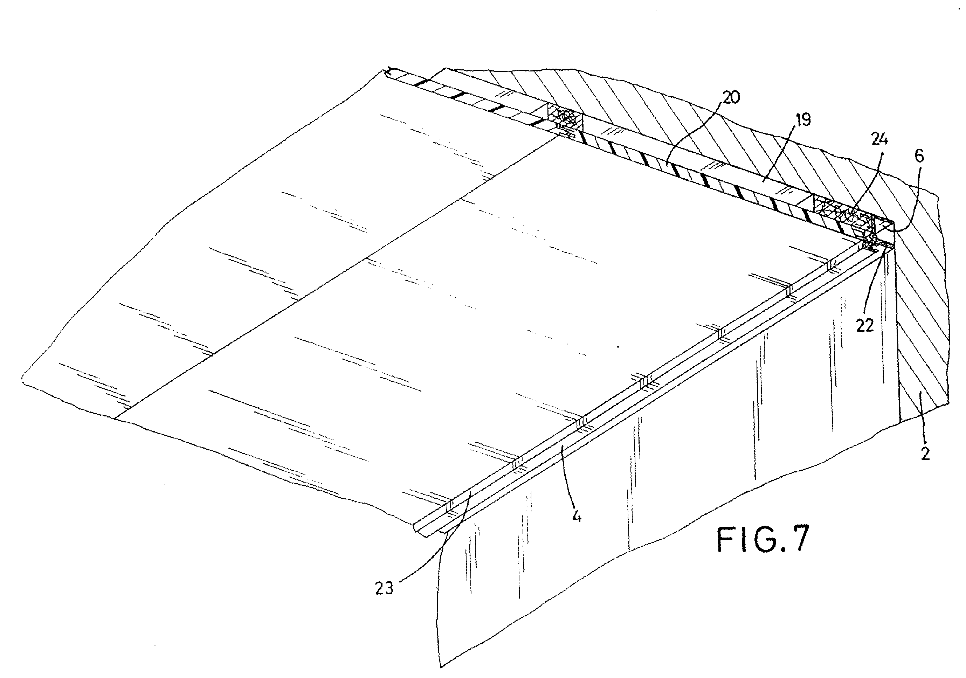

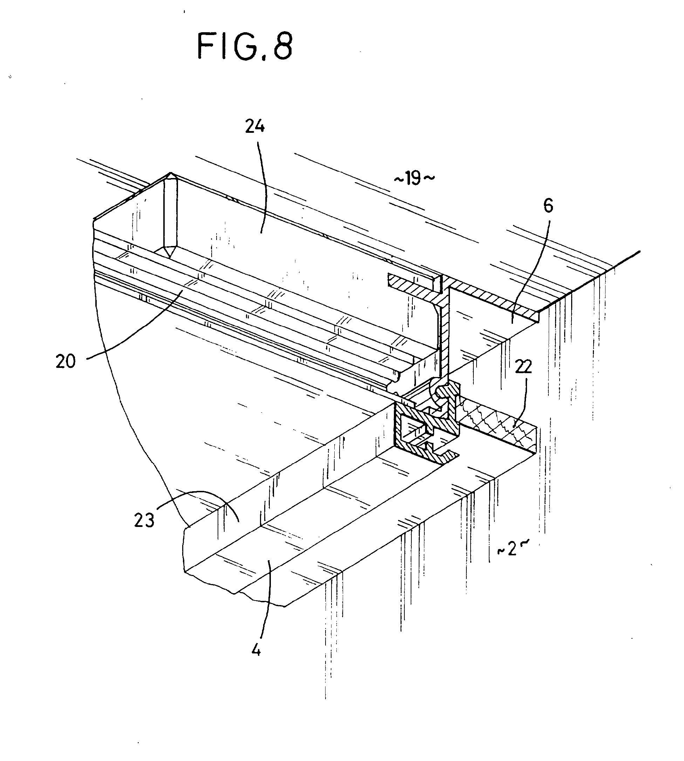

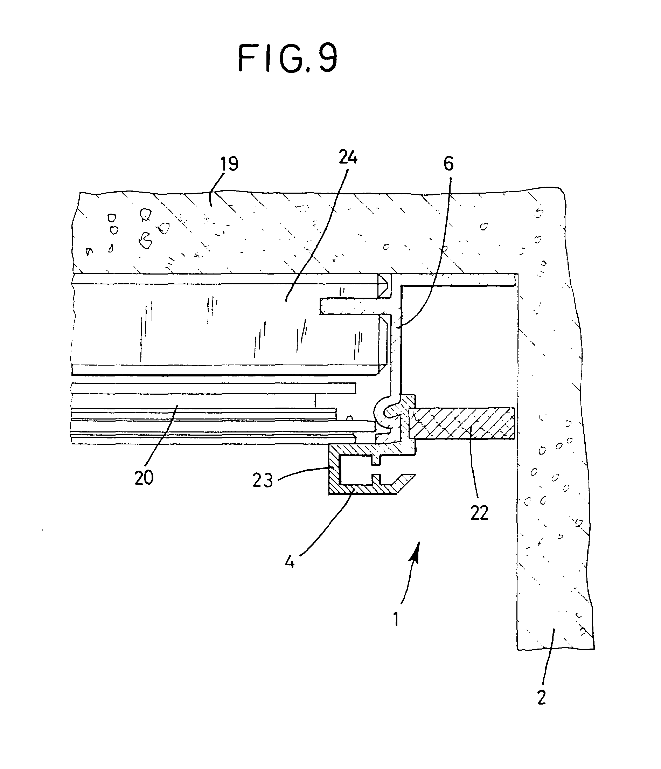

Die Fig. 8 und 9 zeigen das Ausführungsbeispiel gemäß Fig. 7 deutlicher: Der Halter 6 ist auch hier an der dritten Raumwandung 19, nämlich der Decke befestigt und weist eine besonders zugfeste Aufnahme für die Führungsschiene 23 dadurch auf, daß die Führungsschiene 23 an eine senkrecht vom Halter 6 nach unten weisende Rippe angehängt ist. Der Halter 6 weist dabei eine besonders geringe Dicke auf, so daß er lediglich die Höhe benötigt, die durch die Unterlattung 24 und die Paneelelemente 20 ohnehin benötigt wird, so daß sich insbesondere in niedrigeren Räumen hier eine besonders platzsparende Ausgestaltung der Leiste 1 ergibt.

Der Freiraum zur Aufnahme von Kabeln u. dgl. wird hier unmittelbar durch die Schattenleiste 22 begrenzt, die demzufolge vorteilhaft auch gleich als Kantenstreifen oder Dichtlippe ausgestaltet sein kann. Sie kann beispielsweise mit einem ersten formstabileren Abschnitt ausgestaltet sein und mit einem beispielsweise koextrudierten zweiten, demgegenüber flexibel verformbaren Abschnitt, der das Hindurchführen der Kabel aus dem Freiraum nach unten ermöglicht. Alternativ kann dieser Kantenstreifen durch eine unterschiedliche Wandstärke in Zonen einerseits höherer Haltekraft und andererseits leichterer Verformbarkeit unterteilt sein, beispielsweise durch einen etwa dreieckigen Querschnittsverlauf des Kantenstreifens.

Die Führungsschiene 23 bildet hier auch die eigentliche Blendleiste 4 aus, da diese Führungsschiene 23 wie eine Blendleiste die zur Wand 2 gerichtete Kante der Paneelelemente 20 übergreift und abdeckt und insofern den optischen Abschluß der Deckenverkleidung schafft. Die Schattenleiste 22 bzw. der anstelle einer festen Schattenleiste 22 dort vorgesehene Kantenstreifen kann vorteilhaft dunkler als die Paneelelemente 20 eingefärbt sein, um wie eine klassische Schattenfuge zu wirken.

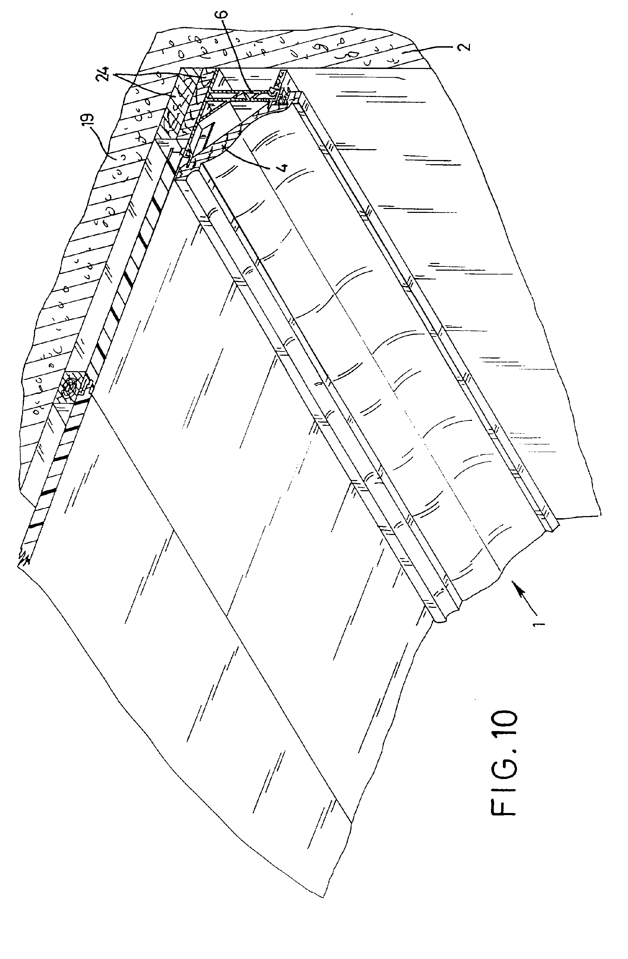

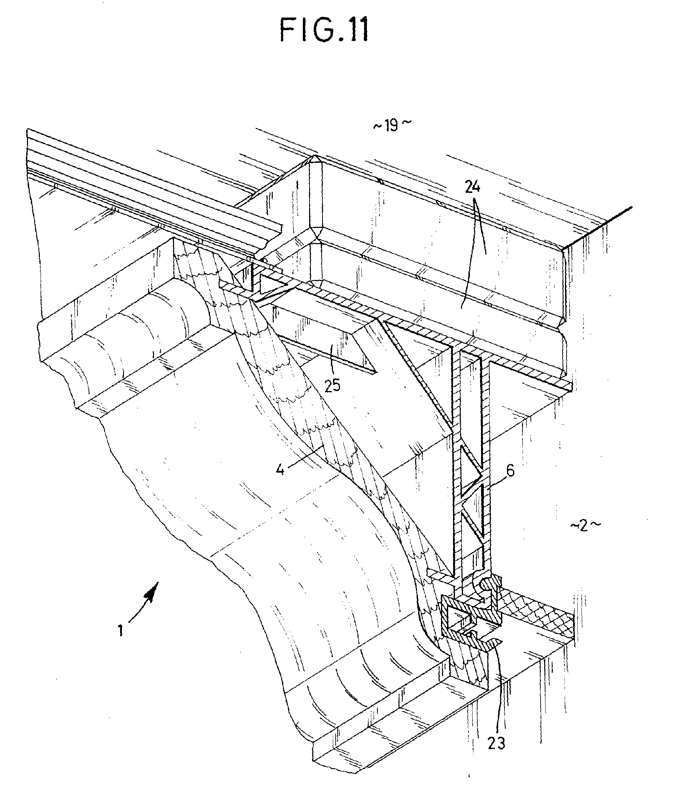

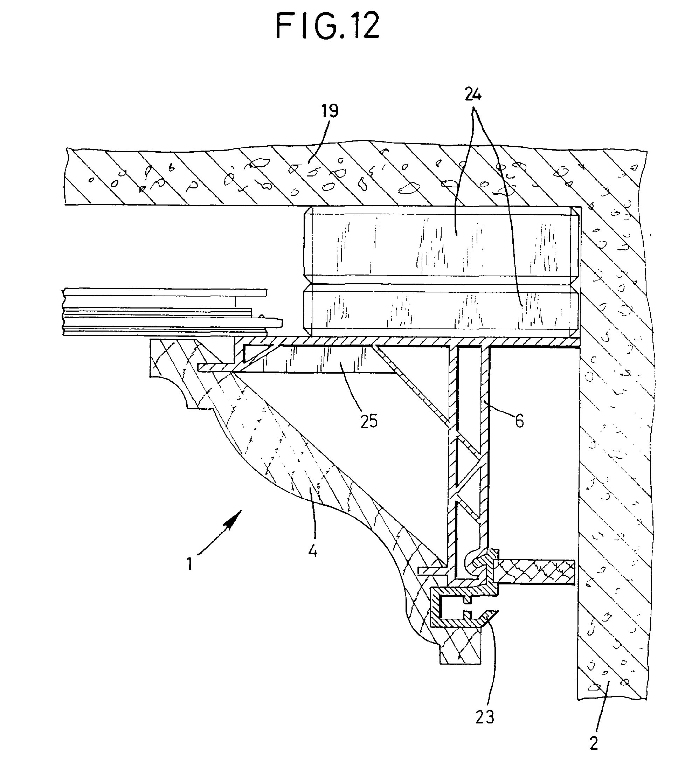

Die Fig. 11 und 12 zeigen genauer das Ausführungsbeispiel von Fig. 10 einer Leiste 1, die als Deckenleiste ausgestaltet ist: Hier ist der Halter 6 nicht an der Wand 2, sondern an der Decke 19 bzw. an der Unterlattung 24 befestigt, und die Führungsschiene 23 ist unmittelbar in ein senkrechtes, doppelwandiges Profilelement des Halters 6 eingehängt, so daß eine besonders stabile Konstruktion des Halters 6 hinsichtlich der Aufnahme von Zugkräften an der Führungsschiene 23 ermöglicht ist. Ein zusätzliches Knotenblech 25 steift den Halter 6 weiterhin aus, um eine formstabile Aufnahme der Blendleiste 4 durch den Halter 6 zu gewährleisten.

Bei den drei dargestellten Ausführungsbeispielen von Deckenleisten ist stets eine Deckenverkleidung in Form von Paneelelementen 20 vorgesehen. Abweichend von diesen Ausführungsbeispielen kann vorgesehen sein, die Blendleiste 4 bis unmittelbar an die dritte Raumwandung 19 reichen zu lassen, so daß besonders preisgünstig die mit der Leiste 1 verbundenen Möglichkeiten auch bei Räumen geschaffen werden, deren Decken unverkleidet sind und nicht vollständig verkleidet werden sollen.

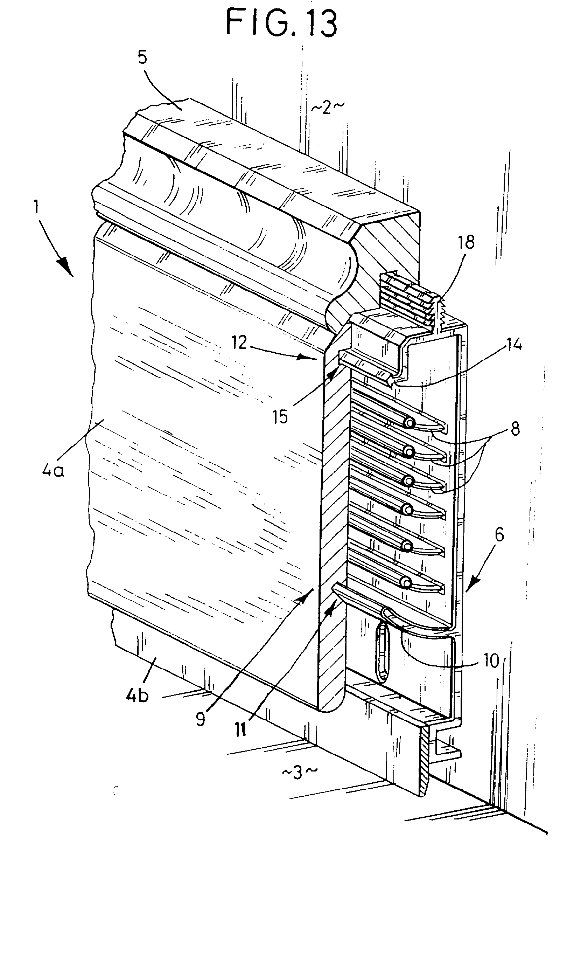

In Fig. 13 ist ein zweites Ausführungsbeispiel einer Bodenleiste 1 dargestellt, wobei dieses Ausführungsbeispiel dem der Fig. 1 bis 3 ähnlich ist, jedoch unter Verzicht auf den Kantenstreifen 7. Stattdessen ist die Blendleiste 4 zweiteilig ausgestaltet mit einem oberen und vorderen Teil 4a und mit einem unteren und hinteren Teil 4b. Zwischen den beiden Teilen 4a und 4b der Blendleiste 4 ergibt sich demzufolge die Austrittsöffnung, durch welche Kabel aus dem Freiraum zwischen Blendleiste 4 und Halter 6 ins Freie geführt werden können.

Bei dem dargestellten Ausführungsbeispiel ist der hintere und untere Teil 4a der Blendleiste 4a so hochgezogen, daß seine Oberkante etwa mit der Unterkante des vorderen und oberen Teiles 4a der Blendleiste 4 fluchtet. Demgegenüber kann eine geringere Höhe des Teiles 4b üblicherweise ausreichen, um bei einem Betrachtungswinkel von schräg oben keine unschöne Lücke zwischen den beiden Teilen 4a und 4b der Blendleiste sichtbar werden zu lassen.

Bei dem in Fig. 13 dargestellten Ausführungsbeispiel weist der Halter 6 an seinem unteren Ende eine etwa U-förmige, nach vorne vorspringende Ausbuchtung auf. Die Oberkante dieser Ausbuchtung bildet gemeinsam mit der Oberkante des unteren hinteren Teiles 4b der Blendleiste 4 eine Auflagefläche für Kabel oder Rohre, so daß diese Auflagefläche das Fußteil 17 bei dem Ausführungsbeispiel gemäß Fig. 2 ersetzt.

Die U-förmige Ausbuchtung am unteren Ende des Halters 6 dient weiterhin durch den Hohlraum den sie schafft zur Aufnahme von Schraubenköpfen od. dgl., wenn mittels derartiger Befestigungsmittel, wie Schrauben, der untere Teil 4b der Blendleiste 4 am Halter 6 befestigt werden soll. Wird dieser untere Teil 4b stattdessen beispielsweise verklebt, so kann die U-förmige untere Ausbuchtung am Halter 6 entfallen, so daß lediglich die Grundplatte des Halters 6 über das untere Langloch hinaus nach unten fortgeführt wird, um dort eine Haltefläche zu schaffen, auf welcher der untere Teil 4b mit dem Halter 6 verklebt werden kann. Durch Entfall der U-förmigen Ausbuchtung am Halter 6 kann der Freiraum zwischen den beiden Teilen 4a und 4b der Blendleiste 4 vergrößert werden, so daß problemlos auch die Durchführung größerer Kabelquerschnitte durch die Austrittsöffnung ermöglicht wird.

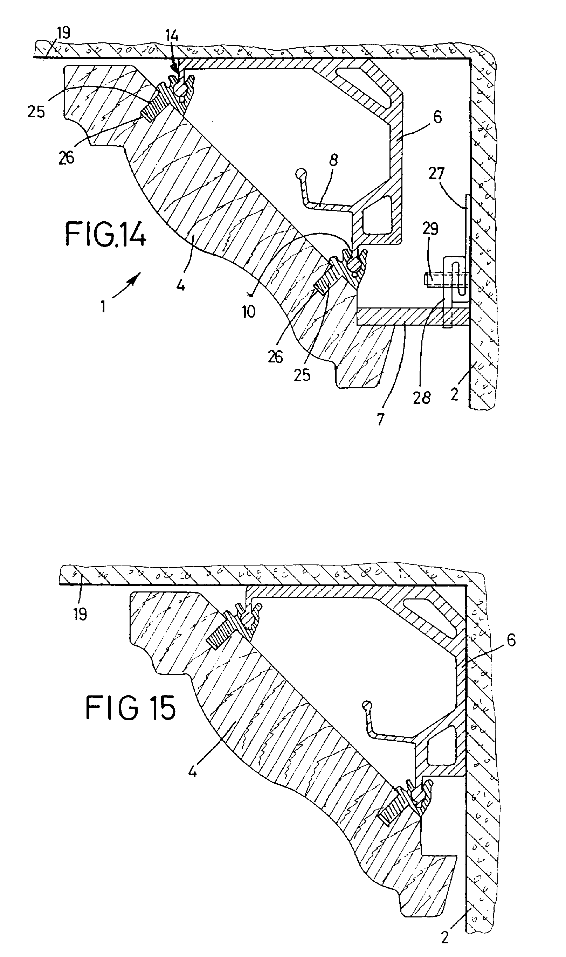

In Fig. 14 ist eine Leiste 1 dargestellt, die als Deckenleiste ausgestaltet ist und in der Raumecke zwischen einer Wand 2 und einer Decke 19 eines Raumes angeordnet ist. Der Halter 6 ist von der Wand 2 beabstandet an der Decke 19 befestigt. Er weist einen Führungssteg 8 zur Halterung von Kabeln auf sowie eine erste untere Halterippe 10 und eine zweite obere Halterippe 14. Die Halterippen 10 und 14 enden mit einer balligen Verdickung, so dass sie durch federelastische Clips 25 umfaßt werden können. Die Clips 25 können vergleichsweise klein dimensioniert, etwa stiftartig ausgestaltet sein oder länglich, z. B. als Strangpressprofil. In beiden Fällen können mehrere derartige Clips im Abstand von einander über die Länge der Blendleiste 4 angeordnet sein. Im Falle einer Ausgestaltung der Clips 25 als Strangpressprofil kann auch vorgesehen sein, die Clips 25 über die ganze Länge der Blendleiste 4 auszubilden.

Mit harpunenstegartig profilierten Fortsätzen erstrecken sich die Clips 25 in Ausnehmungen 26 der Blendleiste 4, wobei diese Ausnehmungen 26 als Nuten oder als Bohrungen ausgestaltet sein können. Durch die Einbringung der Ausnehmung 26 quer zur Rückseite der Blendleiste 4 ist eine besonders einfache Bearbeitung bei der Herstellung der Blendleiste 4 möglich, wobei die Clips 25 durch ihre Gestaltung den schrägwinkligen Anschluß der Blendleiste 4 an den Halter 6 ermöglichen.

Durch den Abstand, den der Halter 6 von der Wand 2 einnimmt, ist die Anbringung eines zweiten Halters an der Wand 2 möglich. Dieser zweite Halter kann ebenfalls vorteilhaft als über die gesamte Länge der Blendleiste 4 verlaufendes Halteprofil 27 ausgestaltet sein, so dass entlang der Leiste 1 an beliebigen Stellen Haltehaken 28 in das Halteprofil 27 eingehängt werden können. Besonders preisgünstig kann dabei vorgesehen sein, die Haltehaken 28 als vergleichsweise kürzere Abschnitte aus dem gleichen Profil herzustellen, welches auch für das Halteprofil 27 Verwendung findet.

Schrauben 29 können vorgesehen sein, um die Haltehaken 28 an dem Halteprofil 27 gegen abhebende und längsverschiebende Kräfte zu sichern.

Der Kantenstreifen 7 ist mit der Blendleiste 4 verbunden, beispielsweise verklebt, und ermöglicht in der bereits erwähnten Weise das Durchführen von Kabeln oder von Halterungen für Bilder, Beleuchtungskörper o, dgl., die an beliebiger Stelle hinter der Blendleiste 4 nach unten geführt werden können. Vorteilhaft kann der Kantenstreifen 7 als Schattenfuge ausgestaltet und dunkel eingefärbt sein.

Fig. 15 zeigt die Blendleiste 4 und den Halter 6 von Fig. 14 in einer Anordnung nahe der Wand 2, unter Verzicht auf den Kantenstreifen 7 und das Halteprofil 27. Bei einer derartigen Anordnung kann der Halter 6 sowohl an der Decke 19 als auch an der Wand 2 befestigt werden.

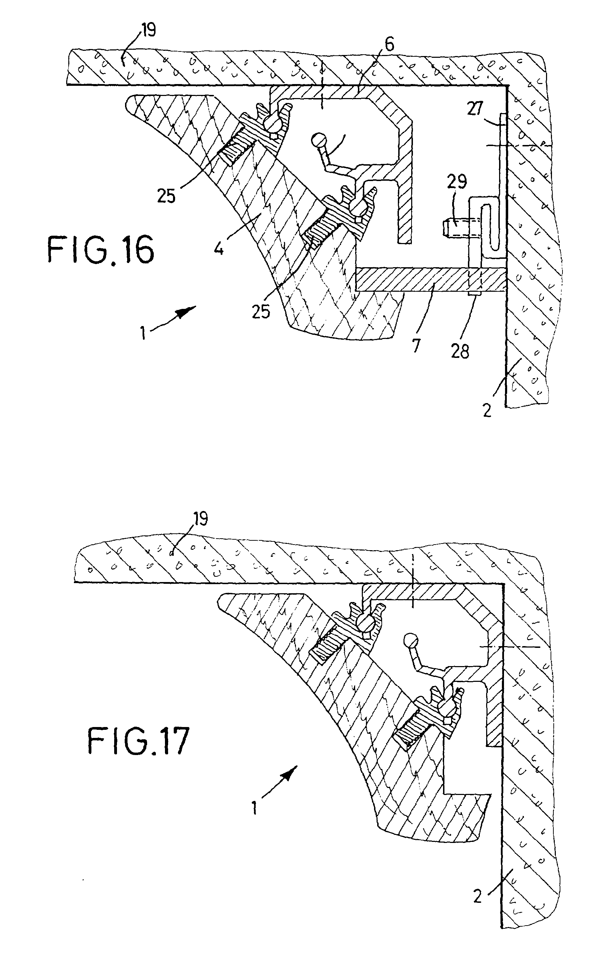

Fig. 16 zeigt ähnlich Fig. 14 eine Blendleiste 4, die mit Hilfe von Clips 25 an einem Halter 6 angebracht ist, welcher im Abstand von einer Wand 2 an einer Decke 19 festgelegt ist. Der Halter 6 ist zur Aufnahme von weniger Kabeln ausgestaltet als der Halter 6 der Fig. 14, so dass insgesamt die gesamte Leiste 1 mit kleineren baulichen Abmessungen, leichter und preisgünstiger realisiert werden kann.

Fig. 17 zeigt die Anordnung von Halter 6 und Blendleiste 4 der Leiste 1 von Fig. 16 unmittelbar an der Wand 2, ähnlich wie aus Fig. 15 bekannt.

Der Kantenstreifen 7 bei den Leisten 1 der Fig. 14 und 16 kann vorteilhaft vom Anwender selbst auf die Blendleiste 4 aufgeklebt werden. Hierzu können entweder die Blendleiste 4 oder der Kantenstreifen 7 entsprechend selbstklebende Bereiche aufweisen, die beispielsweise mit einem Schutzstreifen geschützt und vom Benutzer auf Wunsch aktiviert werden können durch Entfernung des Schutzstreifens. Auf diese Weise wird eine preisgünstige Ausgestaltung der Leisten 1 ermöglicht, die dem Benutzer wahlweise eine Verwendung als reine Dekorleiste und ggf. als Kabelkanal entsprechend den Fig. 15 und 17 ermöglicht, oder eine Verwendung, bei der durch Anbringung des Kantenstreifen 7 eine Funktionsleiste mit variabel velegbaren Zugangsmöglichkeiten geschaffen werden kann, die das Ein- und Ausführen von Kabeln, Bildhaltern od. dgl. in den Hohlraum hinter der Blendleiste 4 ermöglicht und die zudem die Anbringung weiterer Haltemittel, wie des Halteprofils 27, in diesem Hohlraum ermöglicht.

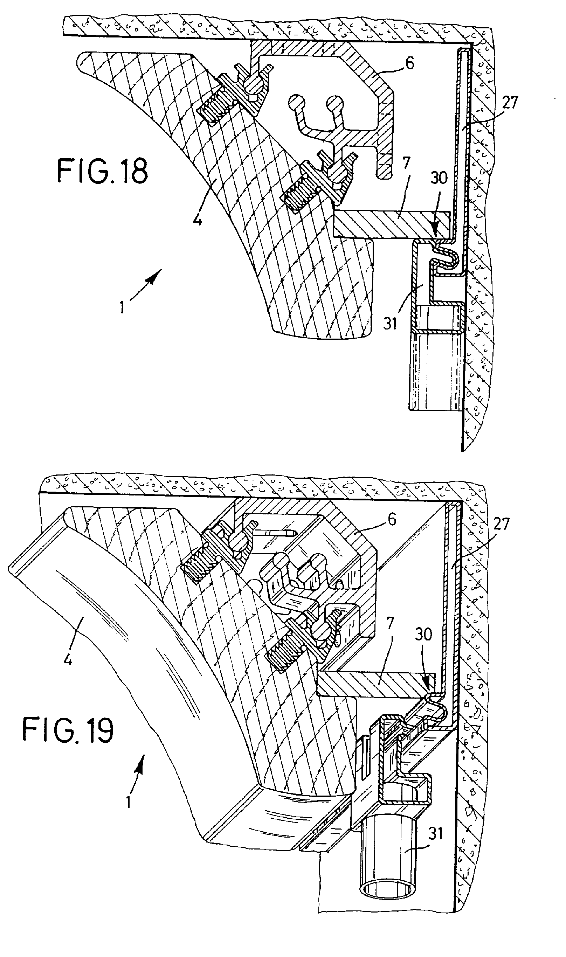

In den Fig. 18 und 19 ist ein Ausführungsbeispiel dargestellt, welches ähnlich den Ausführungsbeispielen der Fig. 14 und 16 ausgestaltet ist. Das Halteprofil 27 weist in den Fig. 18 und 19 jedoch eine eigene Stützfläche 30 zur Halterung des Kantenstreifens 7 auf, so daß der Kantenstreifen 7 aus elastisch verformbarem Material ausgestaltet sein kann, wobei ein Durchhängen dieses Materials und eine unerwünschte Verformung dadurch ausgeschlossen werden kann, daß der Kantenstreifen einerseits auf der Blendleiste 4 und andererseits auf der Stützfläche 30 des Halteprofils 27 aufliegt.

Es kann vorgesehen sein, das Halteprofil 27 bewußt vergleichsweise hoch auszugestalten, und zwar höher als entsprechend den Fig. 14 und 16, so daß eine vereinfachte Montage dadurch erzielt werden kann, daß der Anwender dieses Halteprofil 27 unter die Raumdecke stoßen läßt. Die Stützfläche 30 befindet sich dann automatisch in einer geeigneten Höhe zur Aufnahme des Kantenstreifen 7, wobei diese Höhe auf die Ausgestaltung des Halters 6 und der Blendleiste 4 abgestimmt ist.

Vorteilhaft kann der Kantenstreifen 7 an dem Halteprofil 27 befestigt sein, beispielsweise durch eine Verklebung des Kantenstreifens 7 mit dem Halteprofil 27. Die Blendleiste 4 mit dem Halter 6 kann dabei separat von dem Kantenstreifen 7 und dem Halteprofil 27 verpackt und gehandelt werden, so daß der Benutzer wahlweise nur Halter 6 und Blendleiste 4 in einer Raumecke anbringen kann, ähnlich wie in den Fig. 15 und 17 dargestellt, oder er kann dort, wo elektrische Zuleitungen hinter die Leiste geführt werden sollen oder wo Bilder, Vorhänge, Lampen od. dgl. abgehängt werden sollen, die komplette Leiste, einschl. Halteprofil 27 und Kantenstreifen 7 anbringen.

## Patentansprüche

1. Leiste zur Anbringung an einer Raumwandung, wie Boden-oder Deckenleiste,
wobei die Leiste mehrteilig aufgebaut ist
und einen an einer Raumwandung, wie Wand, Decke oder Boden festlegbaren Halter aufweist,
sowie eine lösbar am Halter festlegbare Blendleiste,
wobei der Halter zwischen der Raumwandung und der Blendleiste einen Freiraum zur Durchführung von elektrischen Kabeln schafft,
**dadurch gekennzeichnet,**
**dass** die Blendleiste (4) eine Austrittsöffnung schafft, welche sich über im wesentlichen die gesamte Länge der Blendleiste (4) erstreckt,
und welche das Durchführen von elektrischen Kabeln in den oder aus dem Freiraum ermöglichend bemessen ist.

2. Leiste nach Anspruch 1, **dadurch gekennzeichnet, dass** die Blendleiste in einem die Austrittsöffnung schaffenden Abstand von der erwähnten Raumwandung (2) oder von einer zweiten Raumwandung (3) endet.

3. Leiste nach Anspruch 1 oder 2, **dadurch gekennzeichnet, dass** die Blendleiste (4) einen Kantenstreifen (7) aufweist, welcher die Austrittsöffnung wenigstens zur Hälfte abdeckt, und
welcher die Kabeldurchführung ermöglichend verformbar ist, wie eine Gummilippe oder Bürste,
oder
welcher eine Vielzahl von Segmenten aufweist, die jeweils die Kabeldurchführung ermöglichend entfernbar sind.

4. Leiste zur Anbringung in Raumecken, wie Bodenleiste,
wobei die Leiste mehrteilig aufgebaut ist
und einen an einer Raumwandung, wie Wand, Decke oder Boden festlegbaren Halter aufweist,
sowie eine lösbar am Halter festlegbare Blendleiste,
wobei der Halter zwischen einer ersten Raumwandung und
der Blendleiste einen Freiraum zur Durchführung von elektrischen Kabeln schafft,
**dadurch gekennzeichnet,**
**dass** die Leiste (1) eine Abdeckleiste (5) aufweist, welche an eine Stirnkante der Blendleiste (4) anschließt.

5. Leiste nach Anspruch 4, **dadurch gekennzeichnet, dass** sich die Abdeckleiste (5), den Halter (6) überdeckend, von der Blendleiste (4) bis an die erste Raumwandung (2) erstreckt.

6. Leiste nach Anspruch 4 oder 5, **dadurch gekennzeichnet, dass** die Leiste (1) als Bodenleiste ausgestaltet ist und die Abdeckleiste (5) die Oberseite der Blendleiste (4) überdeckt.

7. Leiste nach Anspruch 4, **dadurch gekennzeichnet, dass** die Abdeckleiste (5) eine Verbindung zu der Blendleiste (4) schafft, derart, dass die Abdeckleiste (5) am Halter (6) festlegbar ist und ihrerseits den oberen Bereich der Blendleiste (4) festlegt.

8. Leiste zur Anbringung in Raumecken, wie Bodenleiste,
wobei die Leiste mehrteilig aufgebaut ist
und einen an einer Raumwandung, wie Wand, Decke oder Boden festlegbaren Halter aufweist,
sowie eine lösbar am Halter festlegbare Blendleiste,
wobei der Halter zwischen einer ersten Raumwandung und der Blendleiste einen Freiraum zur Durchführung von elektrischen Kabeln schafft,
**dadurch gekennzeichnet,**
**dass** Halter (6) und Blendleiste (4) Verbindungsmittel zur Befestigung der Blendleiste (4) am Halter (6) aufweisen, welche Verbindungsmittel eine erste, untere Verbindung (9) sowie eine zweite, demgegenüber höhere und von der ersten Verbindung (9) beabstandete zweite Verbindung (12) schaffen,
derart, dass die erste Verbindung (9) herstellbar ist, während die Verbindungsmittel, welche die zweite Verbindung (12) bilden, noch voneinander beabstandet sind.

9. Leiste nach Anspruch 8, **dadurch gekennzeichnet, dass** die Blendleiste (4) schräg an den Halter (6) ansetzbar ist, die erste Verbindung (9) schaffend,
und dass die Blendleiste (4) anschließend an den Halter (6) kippbar ist, die zweite Verbindung (12) schaffend.

10. Leiste nach Anspruch 9, **gekennzeichnet durch**
zwei in der Blendleiste (4) längs verlaufende Nuten (11,15),
wobei eine erste untere Nut (11) sich schräg nach oben in die Blendleiste (4) erstreckt
und wobei sich eine zweite obere Nut (15) im wesentlichen horizontal in die Blendleiste (4) erstreckt,
und **gekennzeichnet durch** zwei Rippen (10, 14) am Halter (6)
wobei eine erste untere Rippe (10) - mit der ersten Nut (11) die erste Verbindung (9) schaffend - eine Kippbeweglichkeit der Blendleiste (4) ermöglichend verformbar ist
und wobei eine zweite, obere Rippe (14) - mit der zweiten Nut (15) die zweite Verbindung (12) schaffend - die Blendleiste (4) am Halter (6) festlegt.

11. Leiste zur Anbringung in Raumecken, wie Deckenleiste,
wobei die Leiste mehrteilig aufgebaut ist und einen an einer Raumwandung, wie Wand, Decke oder Boden festlegbaren Halter aufweist
sowie eine lösbar am Halter festlegbare Blendleiste,
wobei der Halter zwischen einer ersten Raumwandung und der Blendleiste einen Freiraum zur Durchführung von elektrischen Kabeln schafft,
**dadurch gekennzeichnet, dass** die Blendleiste (4) vom Halter (6) in einer schräg abwärts weisenden, horizontalen oder aufwärts weisenden Richtung abziehbar ist.

12. Leiste nach Anspruch 11, **gekennzeichnet durch** Stege am Halter (6), auf welche die Blendleiste (4) mit entsprechenden Nuten aufsteckbar ist.

13. Leiste zur Anbringung in Raumecken, wie Deckenleiste,
wobei die Leiste mehrteilig aufgebaut ist und einen an einer Raumwandung, wie Wand, Decke oder Boden festlegbaren Halter aufweist,
sowie eine lösbar am Halter festlegbare Blendleiste,
wobei der Halter zwischen einer ersten Raumwandung und der Blendleiste einen Freiraum zur Durchführung von elektrischen Kabeln schafft,
**gekennzeichnet durch** Haltemittel zum Anhängen von Lasten, wie Lampen, Bilder oder Gardinen.

14. Leiste nach Anspruch 13, **dadurch gekennzeichnet, dass** die Haltemittel als Führungsschiene (23) ausgebildet sind, in welcher die Lasten, wie Lampen, Bilder oder Gardinen längsbeweglich aufnehmbar sind.

15. Leiste nach Anspruch 13 oder 14, **dadurch gekennzeichnet, dass** die Haltemittel an der Blendleiste (4) oder am Halter (6) befestigbar sind.

16. Leiste nach einem der Ansprüche 13 bis 15, **dadurch gekennzeichnet, dass** die Haltemittel als an einer Wand festlegbares Halteprofil (27) ausgestaltet sind.

17. Leiste nach Anspruch 16, **gekennzeichnet durch**, einen Kantenstreifen (7) zwischen der Blendleiste (4) und dem Halteprofil (27), welcher die Kabeldurchführung ermöglichend verformbar ist, wie eine Gummilippe oder Bürste, oder welcher eine Vielzahl von Segmenten aufweist, die jeweils die Kabeldurchführung ermöglichend entfernbar sind.

18. Leiste nach Anspruch 17, **dadurch gekennzeichnet, dass** das Halteprofil (27) eine Stützfläche (30) für den Kantenstreifen (7) aufweist, welcher auf der Stützfläche (30) aufliegt.

19. Leiste nach Anspruch 17, **dadurch gekennzeichnet, dass** der Kantenstreifen (7) an dem Halteprofil (27) befestigt ist, beispielweise angeklebt.

20. Leiste nach Anspruch 3, **dadurch gekennzeichnet, dass** die Blendleiste (4) und der Kantenstreifen (7) als separate Bauteile ausgestaltet sind,
und dass die Blendleiste (4) und / oder der Kantenstreifen (7) eine selbstklebende Beschichtung zur Herstellung einer diese beiden Bauteile verbindenden Verklebung aufweist.
